# EUROPÄISCHE PATENTSCHRIFT

(11) **EP 2 091 685 B1**
(45) Veröffentlichungstag und Bekanntmachung des Hinweises auf die Patenterteilung: **05.09.2012**
(21) Anmeldenummer: 07819408.1
(22) Anmeldetag: 29.10.2007
(51) Int. Cl.: B23K 20/12

(54) **REIBSCHWEISSVERBINDUNG VON ZWEI AUFEINANDER LIEGENDEN FLÄCHIGEN BAUTEILEN**
FRICTION WELDING JOINT OF TWO TWO-DIMENSIONAL COMPONENTS POSITIONED ON TOP OF EACH OTHER
ASSEMBLAGE SOUDÉ PAR FRICTION DE DEUX ÉLÉMENTS PLANS SUPERPOSÉS

(30) Priorität: 15.11.2006 DE 102006053800
(43) Veröffentlichungstag der Anmeldung: 26.08.2009
(73) Patentinhaber: EJOT GmbH & Co. KG, 57334 Bad Laasphe (DE)
(72) Erfinder: EBERHARD, Christ, 99897 Tambach-Dietharz (DE); THIEM, Jörg, 98544 Zella-Mehlis (DE); FUCHS, Torsten, 99897 Tambach-Dietharz (DE); DUBIEL, Gerhard, 99842 Ruhla (DE)
(74) Vertreter: Bardehle, Heinz
(86) Internationale Anmeldenummer: PCT/EP2007/009366
(87) Internationale Veröffentlichungsnummer: WO 2008/058625

(56) Entgegenhaltungen:
- EP-A- 1 060 826
- DE-A- 19 620 814
- FR-A- 2 883 499
- GB-A- 2 263 247

## Beschreibung

Die Erfindung bezieht sich auf eine Reibschweißverbindung mit mehreren aufeinander liegenden flächigen Bauteilen, die von einem Verbindungskörper zusammengehalten sind, der mit einem Bund auf einem oberen Bauteil aufsitzt. Eine solche Reibschweißverbindung ist in dem Oberbegriff von Anspruch 1 beschrieben.

Eine derartige Reibschweißverbindung ist in der DE 196 20 814 A1 offenbart. Durch diese bekannte Reibschweißverbindung werden zwei flächige, aufeinander liegende Bauteile zusammengehalten, die aus gleichartigem Material, z.B. aus Aluminium oder einer Aluminium-Legierung, bestehen. Die hierzu dienende Reibschweißverbindung wird dadurch hergestellt, dass die geschlossene Stirnseite des Verbindungskörpers, die entweder als flacher Kegel oder mit sägezahnförmigen Rillen ausgebildet ist, auf das obere Bauteil aufgesetzt wird und dieses durch Rotation unter Druck durchdringt. Dabei wird das obere Bauteil plastifiziert und eine entstandene Schmelze verbindet die beiden Bauteile miteinander.

Bei diesem Vorgang muss über den gesamten Querschnitt des in das obere Bauteil eindringenden Verbindungskörpers das Material des oberen Bauteiles entweder erschmolzen oder zerspant werden, wobei offen bleibt, wie die Späne abtransportiert werden können. Im Falle des Erschmelzens des betreffenden Bereichs des oberen Bauteils erfordert dies einen erheblichen Energieaufwand. Die aus der in der Druckschrift bekannten Methode der Herstellung einer Reibschweißverbindung zwischen zwei aufeinander liegenden Bauteilen bringt daher erhebliche technische Probleme mit sich.

Ein ähnliches Verfahren zur Reibschweißverbindung von zwei aufeinander liegenden Dünnblechen ist in der PCT-Veröffentlichung WO 98/04381 offenbart. Bei diesem Verfahren wird ein runder Stempel als Reibelement mit radial abgeschnittener ebener Stirnfläche unter Rotation und Druck durch das obere Dünnblech hindurchgedrückt, wobei dieses aufschmilzt. Der Stempel dringt dann über eine relativ kurze Länge auch in das untere Dünnblech ein, das dabei ebenfalls erschmolzen wird, so dass sich eine den Stempel gewissermaßen zylindrisch umgebende Schmelzezone ergibt, durch die die beiden Dünnbleche zusammengehalten werden. Danach wird der Stempel aus der Schmelzezone herausgezogen.

Auch bei diesem Verfahren bleibt offen, wo das erschmolzene Material aus dem unteren Dünnblech und vor allem das dem gegenüber wesentlich umfangreichere erschmolzene Material aus dem oberen Dünnblech hinfließen. Jedenfalls ist diesbezüglich der Druckschrift nichts zu entnehmen.

Die Erkenntnis, dass beim Eindringen eines Verbindungskörpers in ein oberes Bauteil von zwei aufeinander liegenden Bauteilen das dabei erschmolzene Material irgendwie untergebracht werden muss, damit es nicht stört, hat offensichtlich in Anbetracht des bestehenden Bedürfnisses, eine Reibschweißverbindung für zwei aufeinander liegende flächigen Bauteile zu finden, zu dem in der EP 1 230 062 B1 beschriebenen Verfahren gerührt, das im Prinzip so abläuft, wie dies in der WO 98/04381 beschrieben ist, wobei aber zusätzlich mittels einer den Stempel mit Spielraum umgebenen Hülse, die auf das obere Bauteil drückt, ein Zwischenraum zwischen der Innenfläche der Hülse und dem Stempel geschaffen wird, in den beim Erschmelzen von Material aus dem oberen und unteren Bauteil dieses hineinfließen kann, das der Stempel gewissermaßen in diesen Hohlraum drückt, aus dem es dann wieder in die Bereiche des oberen und untern Bauteils zurückfließt, aus denen es herausgedrückt worden war, womit eine dem Eindringbereich des Stößels entsprechende relativ große Zone aus dem oberen und unteren Bauteil wieder mit flüssigem Material angefüllt wird, das dann die Verbindung zwischen dem oberen und unteren Bauteil bildet.

Es handelt sich hierbei also um ein technologisch nicht einfach durchzuführendes Verfahren, bei dem vor allem große Wärmemengen erforderlich sind, da nur ein Plastifizieren des Materials des oberen bzw. unteren Bauteils nicht ausreicht, um diesen Fluss des erschmolzenen Materials zu ermöglichen, vielmehr muss dieses relativ dünnflüssig erschmolzen werden, um das Einfließen in den Ringraum zwischen Hülse und Stempel danach wieder zurück in den Raum, aus dem es verdrängt worden ist, zu ermöglichen.

Der Erfindung liegt die Aufgabe zugrunde, eine Reibschweißverbindung von mehreren aufeinander liegenden flächigen Bauteilen zu schaffen, bei der im Bereich einer räumlich eng begrenzten Berührungszone um einen Verbindungskörper herum eine konzentrierte Rotationsschweißzone erzeugt wird und das dabei notwendigerweise verdrängte Material aus den aufeinander liegenden flächigen Bauteilen so aufgefangen werden kann, dass es im Gesamtaufbau mit der ReibSchweißverbindung von mehreren aufeinander liegenden flächigen Bauteilen und einem Verbindungskörper nicht stört.

Erfindungsgemäß geschieht dies dadurch, dass der Verbindungskörper als mit Gewinde versehendes Rohrstück ausgebildet und das obere Bauteil von dem eine stirnseitige Ringschneide aufweisenden Verbindungskörper unter Rotation und Druck durchdrungen ist, der nach Durchschneiden des oberen Bauteils unter Rotation und Druck mit seiner Stirnseite und Aufnahme des ausgeschnittenen Materials des oberen Bauteils in seinen Hohlraum mit dem unteren Bauteil eine durch Rotation und Druck des Verbindungskörpers erzeugte Reibschweißzone bildet, durch die der Bund an das obere Bauteil angedrückt ist.

Aufgrund der Ausbildung des Verbindungskörpers als Rohrstück ergibt sich mit dem Hohlraum des Verbindungskörpers ein Aufnahmeraum für das Material aus den flächigen Bauteilen, das beim Aufsetzen des Verbindungskörpers unten Druck und Rotation desselben verdrängt werden muss, um schließlich im Bereich der Stirnseite des rohrförmigen Verbindungskörpers die erforderliche Reibschweißzone zu erzeugen. Die Gestaltung des Verbindungskörpers als Rohr erlaubt es dabei, die Stirnseite dieses Rohrstückes als Ringschneide auszunutzen, die nur in dem relativ schmalen Bereich ihrer Berührung mit den flächigen Bauteilen aus diesen Material zu entfernen und zu plastifizieren hat, so dass bei dem Verfahren nur eine relativ geringe Menge an Material aus den Bauteilen zu plastifizieren ist, was für die Zurverfügungstellung der notwendigen Energie zum Erwärmen des Materials von Bedeutung ist. Dabei wird noch für das Zusammenhalten der flächigen Bauteile der an den Verbindungskörper angebrachte Bund ausgenutzt, der mit seinem Bund auf dem oberen Bauteil aufsitzt, dieses gegen ein unteres Bauteil drückt, welches durch die Reibschweißzone sowohl mit der Stirnseite des Verbindungskörpers als auch mit dem unteren Rand des oberen Bauteils verbunden ist, so dass sich eine feste, strapazierfähige Verbindung zwischen den aufeinander liegenden flächigen Bauteilen ergibt. Dabei kann es sich vorzugsweise um zwei aufeinander liegende Bauteile handeln, es können aber auch mehr flächige Bauteile auf diese Weise miteinander verbunden werden.

Eine zweckmäßige Gestaltung für den Verbindungskörper ergibt sich dadurch, dass man diesen als Hohlbolzen ausbildet. Es ist aber auch möglich, den Verbindungskörper als Mutter auszubilden.

Das obere Bauteil kann vorteilhaft aus Leichtmetall bestehen. Es ist aber auch möglich, das obere Bauteil aus Kunststoff auszubilden.

Für das untere Bauteil gibt es ähnliche Möglichkeiten, es kann z.B. entweder aus Metall oder aus Kunststoff bestehen.

Auch für den Verbindungskörper bestehen verschiedene Möglichkeiten für den verwendeten Werkstoff. Eine vorteilhafte Ausbildung besteht darin, den Verbindungskörper aus Metall herzustellen. Es ist aber auch möglich, den Verbindungskörper aus Kunststoff auszubilden.

Um die Ringschneide des Verbindungskörpers, die in die aufeinanderliegenden flächigen Bauteile unter Rotation und Druck eindringt, hinsichtlich ihrer Funktion günstig zu gestalten, gibt man dieser vorteilhaft eine scharfe Außenkante an dem als Rohr ausgebildeten Verbindungskörper, wobei die Stirnseite des Rohres trichterförmig in den Hohlraum übergeht, was das Aufnehmen des erschmolzenen Materials aus den flächigen Bauteilen erleichtert.

Die Außenkante kann sowohl geschlossen, nach Art einer Schneide, umlaufen, es ist aber auch möglich, die Außenkante mit Zähnen zu versehen.

Um dem Bund eine ständig wirkende gewünschte Vorspannung in Richtung auf das obere Bauteil zu geben, sieht man zwischen Bund und oberem Bauteil zweckmäßig ein Federelement vor, das auf das obere Bauteil drückt. Um dabei dem Federelement eine gewünschte Vorspannung zu geben, wird nach Ausbildung der Rotationsschweißzone der Bund bei Stillstand an das obere Bauteil angedrückt. Dies geschieht zweckmäßig durch eine auf den Bund wirkende axiale Druckkraft bei Stillstand des Verbindungskörpers.

Um ein Wegfließen des erschmolzenen Materials aus den flächigen Bauteilen auf dem Wege um das Rohr herum in Richtung Flansch und nach außen zu verhindern, versieht man den Bund zweckmäßig auf seiner dem oberen Bauteil zugewandten Seite mit einem Ringwulst, der gewissermaßen in radialer Richtung nach außen als Abdichtung wirkt. Durch die entstehende hohe Flächenpressung wird der Ringwulst in das obere Bauteil eingedrückt.

In den Figuren sind Ausführungsbeispiele der Erfindung dargestellt. Es zeigen
- Fig. 1: einen als Hohlbolzen gestalteten Verbindungskörper;
- Fig. 2: eine Reibschweißverbindung zweier flächiger Bauteile, zusammengehalten durch den Verbindungskörper gemäß Fig. 1;
- Fig. 3: eine Abwandlung des Verbindungskörpers gemäß Fig. 1, und zwar mit einem mit Außengewinde versehenen Bolzen;
- Fig. 4: einen als Mutter ausgebildeten Verbindungskörper;
- Fig. 5: einen Verbindungskörper mit Federelement;
- Fig. 6: einen Verbindungskörper mit einem Ringwulst am Bund.

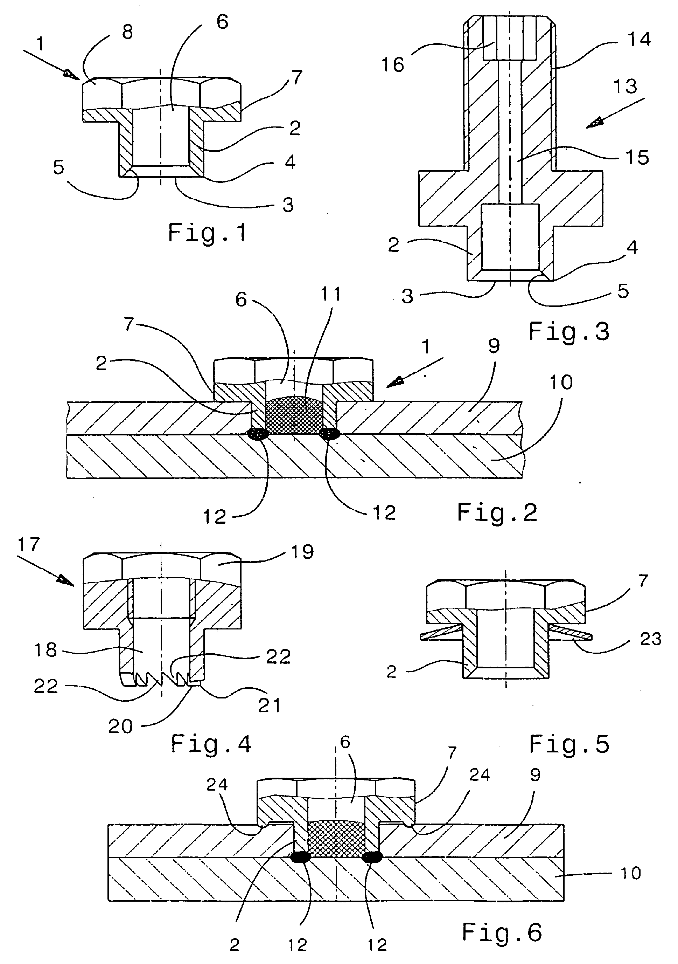

In der Fig. 1 ist der als rohrförmige Hohlbolzen ausgebildete Verbindungskörper 1 dargestellt, der aus dem Rohrstück 2 besteht, dessen Stirnseite 3 mit der Ringschneide 4 versehen ist. Von der Ringschneide 4 geht das Material des Rohrstücks 2 nach Art eines Trichters 5 in den Hohlraum 6 des Verbindungskörpers 1 über. Der Verbindungskörper 1 besitzt an seiner der Stirnseite 3 gegenüberliegenden Seite den Bund 7, der teilweise im Schnitt gezeichnet ist und an seiner der Stirnseite 3 abgewandten Seite in den Sechskant 8 übergeht. Der Sechskant 8 dient zur Aufnahme in irgendeinem Futter einer Rotationsmaschine.

Die Reibschweißverbindung mit dem Verbindungskörper gemäß Fig. 1 ist in der Fig. 2 dargestellt. Hier sind die beiden aufeinander liegenden flächigen Bauteile, nämlich das obere Bauteil 9 und das untere Bauteil 10 wiedergegeben, die satt aufeinander liegen. In das obere Bauteil 9 ist das Rohrstück 2 bis zu dem unteren Bauteil 10 durchgedrungen, und zwar aufgrund von Rotation und Druck des Verbindungskörpers 1, wodurch Verdrängungsmaterial 11 aus dem oberen Bauteil 9 in den Hohlraum 6 des Rohrteils 2 hineingedrückt ist. Das Verdrängungsmaterial 11 ist damit in der endgültigen Reibschweißverbindung sicher in dem Rohrstück 2 untergebracht und kann aus diesem nicht heraustreten, da sich an der Stirnseite des Rohrstücks 2 die Reibschweißzone 12 gebildet hat, die das Bauteil 10 an dem Verbindungskörper 1 festhält. Diese Reibschweißzone 12 geht mindestens oberflächlich in das Verdrängungsmaterial 11 über und hält dieses damit fest. Auf der anderen Seite des Verbindungskörpers 1 drückt dieser mit seinem Bund 7 auf das obere Bauteil 9, das somit gewissermaßen zwischen Bund 7 und unterem Bauteil 10 eingespannt ist. Anstelle von zwei Bauteilen 9 und 10 können auch drei oder mehrere flächige Bauteile mittels des Verbindungskörpers vorgesehen sein.

Anstelle des Verbindungskörpers gemäß Fig. 1 kann man auch den in der Fig. 3 dargestellten Verbindungskörper verwenden, der hier durch einen Hohlbolzen 13 gebildet ist. Auf den Hohlbolzen 13 ist das Gewinde 14 geschnitten, das es ermöglicht, mit irgendeiner Mutter ein weiteres Bauteil an dem Hohlbolzen 13 zu befestigen. Der Hohlbolzen 13 besitzt eine durchgehende Bohrung 15, die im Bereich der Stirnseite 3 (die der Stirnseite 3 gemäß Fig. 1 entspricht) wie der Hohlraum 6 ausgebildet ist und im Bereich des Gewindes 14 die durchgehende engere Bohrung 15 aufweist, die auf der der Stirnseite 3 abgewandten Seite des Hohlkörpers 13 in einem Innensechskant 16 endet. Der Innensechskant 16 dient zur Aufnahme eines Werkzeugs einer Rotationsmaschine, mit dem der Verbindungskörper 13 sowohl gedreht als auch gegen aufeinander liegende flächige Bauteile gedrückt werden kann. Bezüglich der weiteren Wirkungsweise des Verbindungskörpers 13 sei auf die vorstehenden Erklärungen zu Fig. 1 und Fig. 2 verwiesen.

Eine weitere Abwandlung des Verbindungskörpers ist in der Fig. 4 dargestellt, bei der es sich um eine Mutter 17 als Verbindungskörper handelt. Die Mutter 17 ist rohrartig ausgebildet, besitzt also einen durchgehenden Hohlraum 18 zur Aufnahme von aus einem oberen Bauteil herausgeschnittenem Material. Der Verbindungskörper 17 ist, wie bei einer Mutter üblich, mit einem Sechskant versehen, um in ein Antriebswerkzeug sicher eingespannt werden zu können.

Bezüglich der Wirkung der Stirnseite 3 des jeweiligen Verbindungskörpers sei zunächst nochmals auf die Fig. 1 und 2 Bezug genommen, in denen der Verbindungskörper 1 bzw. 13 an seiner Stirnseite 3 mit der Schneide 4 versehen ist, die ringartig entlang der Außenkante der Stirnseite 3 verläuft und nach innen hin den Trichter 5 bildet, über den aus dem oberen flächigen Bauteil 9 herausgeschnittenes Material in den Hohlraum 6 gefördert werden kann.

Bei der Ausführungsform des Verbindungskörpers 17 als Mutter gemäß Fig. 4 ist die Stirnseite 20 längs ihrer Außenkante 21 mit den Zähnen 22 versehen, die beim Aufsetzen auf ein oberes Bauteil fräserartig das Material aus dem oberen Bauteil herausfräsen, das dann in der oben beschriebenen Weise in den Hohlraum 18 bzw. 6 des betreffenden Verbindungskörpers befördert wird.

In Figur 5 ist der Verbindungskörper 1 gemäß Figur 1 dargestellt, der gemäß Figur 5 zusätzlich mit der Tellerfeder 23 versehen ist. Die Tellerfeder 23 ist unter dem Bund 7 auf das Rohrstück 2 aufgeschoben und dient dazu, im eingesetzten Zustand, wie er in der Figur 2 dargestellt ist, mit einem bestimmten Federdruck auf das obere Bauteil 9 zu drücken, womit selbst dann, wenn die Rotationsschweißzone 12 (siehe Figur 2) den Verbindungskörper 1 nicht satt an das obere Bauteil 9 heranzieht, dieses doch aufgrund der dann gespannten Tellerfeder 23 von dem Bund 7 mit Druck beaufschlagt wird.

In der Figur 6 ist eine Abwandlung der Gestaltung des Verbindungskörpers dargestellt, der hier im Bereich des Bundes 7 auf der dem oberen Bauteil 9 zugewandten Seite mit dem Ringwulst 24 versehen ist. Der Ringwulst 24 verläuft am äußeren Rand des Bundes 7 und bildet bei seinem Anliegen an der Oberfläche des oberen Bauteils 9 gewissermaßen eine Abdichtung, so dass, wenn aufgrund der Erzeugung der Reibschweißzone 12 verflüssigtes Material von den beiden Bauteilen 9 und 10 an der Außenseite des Rohrstücks 2 in Richtung Bund 7 gedrückt wird, dieses dann auch unter den Bund 7 gelangen würde, wo es dann aber am Austreten nach außen hin durch den Ringwulst 24 gehindert wird.

Ergänzend sei noch darauf verwiesen, dass der Verbindungskörper 1 gemäß Figur 6 gegen das obere Bauteil 9 gedrückt worden ist, um die vorstehend erwähnte sichere Abdichtung mittels des Ringwulstes 24 zu erzielen. Dieses Andrücken geschieht zweckmäßig als ein eigener Vorgang am Ende der Rotation des Verbindungskörpers, also bei dessen Stillstand, indem auf den Verbindungskörper 1 ein von seinem Rotationswerkzeug ausgehender Druck ausgeübt wird, durch den der Verbindungskörper 1 in das obere Bauteil eingedrückt wird.

## Patentansprüche

1. Reibschweißverbindung von mehreren aufeinander liegenden flächigen Bauteilen (9,10), die von einem Verbindungskörper (1, 17) zusammengehalten sind, der mit einem Bund (7) auf einem oberen Bauteil (9) aufsitzt, **dadurch gekennzeichnet, dass** der Verbindungskörper (1, 17) als mit Gewinde versehendes Rohrstück (2) ausgebildet und das obere Bauteil (9) von dem eine stirnseitige Ringschneide (4) aufweisenden Verbindungskörper (1, 17) durchdrungen ist, der nach Durchschneiden des oberen Bauteils (9) unter Rotation und Druck mit seiner Stirnseite (3) und Aufnahme des ausgeschnittenen Materials des oberen Bauteil (9) in seinen Hohlraum (6) mit dem unteren Bauteil (10) eine durch Rotation und Druck des Verbindungskörpers (1, 17) erzeugte Reibschweißzone (12) bildet, durch die der Bund (7) an das obere Bauteil (9) angedrückt ist.

2. Reibschweißverbindung nach Anspruch 1, **dadurch gekennzeichnet, dass** der Verbindungskörper (1) als Hohlbolzen ausgebildet ist.

3. Reibschweißverbindung nach Anspruch 1, **dadurch gekennzeichnet, dass** der Verbindungskörper (17) als Mutter ausgebildet ist.

4. Reibschweißverbindung nach einem der Ansprüche 1 bis 3, **dadurch gekennzeichnet, dass** das obere Bauteil (9) aus Leichtmetall besteht.

5. Reibschweißverbindung nach einem der Ansprüche 1 bis 3, **dadurch gekennzeichnet, dass** das obere Bauteil (9) aus Kunststoff besteht.

6. Reibschweißverbindung nach einem der Ansprüche 1 bis 5, **dadurch gekennzeichnet, dass** das untere Bauteil (10) aus Metall besteht.

7. Reibschweißverbindung nach einem der Ansprüche 1 bis 5, **dadurch gekennzeichnet, dass** das untere Bauteil (10) aus Kunststoff besteht.

8. Reibschweißverbindung nach einem der Ansprüche 1 bis 7, **dadurch gekennzeichnet, dass** der Verbindungskörper (1, 17) aus Metall besteht.

9. Reibschweißverbindung nach einem der Ansprüche 1 bis 7, **dadurch gekennzeichnet, dass** der Verbundkörper(1, 17) aus Kunststoff besteht.

10. Reibschweißverbindung nach einem der Ansprüche 1 bis 9, **dadurch gekennzeichnet, dass** die Ringschneide (4) durch eine scharfe Außenkante des Rohres (2) gebildet ist, von der aus die Stirnseite (3) des Rohrstückes (2) trichterförmig in den Hohlraum (6) übergeht.

11. Reibschweißverbindung nach einem der Ansprüche 1 bis 10, **dadurch gekennzeichnet, dass** die Außenkante geschlossen umläuft.

12. Reibschweißverbindung nach einem der Ansprüche 1 bis 10, **dadurch gekennzeichnet, dass** die Außenkante Zähne (22) aufweist.

13. Reibschweißverbindung nach einem der Ansprüche 1 bis 12, **dadurch gekennzeichnet, dass** der Bund (7) über ein Federelement (23) auf das obere Bauteil (9) drückt.

14. Reibschweißverbindung nach einem der Ansprüche 1 bis 13, **dadurch gekennzeichnet, dass** der Bund (7) nach Ausbildung der Reibschweißzone (12) bei Stillstand an das obere Bauteil (9) angedrückt ist.

15. Reibschweißverbindung nach einem der Ansprüche 1 bis 14, **dadurch gekennzeichnet, dass** der Bund (7) auf seiner dem oberen Bauteil (9) zugewandten Seite einen Ringwulst (24) aufweist.

## Claims

1. A friction welding joint of a plurality of two-dimensional components (9, 10) positioned on top of each other, which are held together by a connecting body (1, 17), which rests on an upper component (9) by means of a collar (7), **characterized in that** the connecting body (1, 17) is designed as a tube piece (2)provided with a thread, and the upper component (9) is penetrated by the connecting body (1, 17) having a front annular cutting edge (4), the connecting body, after cutting through the upper component (9) by means of the front (3) thereof by means of rotation and pressure and accommodating the cut-out material of the upper component (9) in the hollow space (6) thereof, forms a friction welding zone (12) created by means of rotation and pressure of the connecting body (1, 17), with the lower component (1) whereby the collar (7) is pressed to the upper component (9).

2. The friction welding joint according to claim 1, **characterized in that** the connecting body (1) is designed as a hollow bolt.

3. The friction welding joint according to claim 1, **characterized in that** the connecting body (17) is designed as a nut.

4. The friction welding joint according to any of the claims 1 to 3, **characterized in that** the upper component (9) is made of light metal.

5. The friction welding joint according to any of the claims 1 to 3, **characterized in that** the upper component (9) is made of plastic.

6. The friction welding joint according to any of the claims 1 to 3, **characterized in that** the lower component (10) is made of metal.

7. The friction welding joint according to any of the claims 1 to 5, **characterized in that** the lower component (10) is made of plastic.

8. The friction welding joint according to any of the claims 1 to 7, **characterized in that** the connecting body (1, 17) is made of metal.

9. The friction welding joint according to any of the claims 1 to 7, **characterized in that** the connecting body (1, 17) is made of plastic.

10. The friction welding joint according to any of the claims 1 to 9, **characterized in that** the annular cutting edge (4) is formed by a sharp outer edge of the tube (2), from which the front (3) of the tube piece (2) merges with the hollow space (6) in the shape of a funnel.

11. The friction welding joint according to any of the claims 1 to 10, **characterized in that** the outer edge runs in a closed circumferential manner.

12. The friction welding joint according to any of the claims 1 to 10, **characterized in that** the outer edge has teeth (22).

13. The friction welding joint according to any of the claims 1 to 12, **characterized in that** the collar (7) presses against the upper component (9) via a spring element (23).

14. The friction welding joint according to any of the claims 1 to 13, **characterized in that** the collar (7) is pressed against the upper component (9) during standstill after the friction welding zone (12) is formed.

15. The friction welding joint according to any of the claims 1 to 14, **characterized in that** the collar (7) has an annular ridge (24) on its side facing the upper component (9).

## Revendications

1. Joint de soudage de plusieurs éléments de construction de grande étendue superposés les uns sur les autres (9, 10) retenus ensemble à l'aide d'un corps de connexion (1, 17) qui repose sur un élément de construction supérieure (9) avec un épaulement (7), **caractérisé en ce que** le corps de connexion (1, 17) est configuré comme une pièce de tuyau filetée (2) et que l'élément de construction supérieur (9) est transpercé par le corps de connexion (1, 17) doté d'une cuvette (4), qui, après le sectionnement de l'élément de construction supérieur (9) grâce à la rotation et la pression de son côté frontal (3), et la prise du matériel découpé de l'élément de construction supérieur (9) dans son espace creux (6), forme avec l'élément de construction inférieur (10) une zone de soudage par friction (12) engendrée par la rotation et la pression du corps de connexion (1, 17) et qui est appuyée par l'épaulement (7) de l'élément de construction supérieur (9).

2. Joint de soudage par friction selon la revendication 1, **caractérisé en ce que** le corps de connexion (1) est configuré comme un boulon creux.

3. Joint de soudage par friction selon la revendication 1, **caractérisé en ce que** le corps de connexion (17) est configuré comme un écrou.

4. Joint de soudage par friction selon la revendication 1 à 3, **caractérisé en ce que** l'élément de construction supérieur (9) est composé de métal léger.

5. Joint de soudage par friction selon la revendication 1 à 3, **caractérisé en ce que** l'élément de construction supérieur (9) est composé de plastique.

6. Joint de soudage par friction selon l'une des revendications 1 à 5, **caractérisé en ce que** l'élément de construction inférieur (10) est composé de métal.

7. Joint de soudage par friction selon l'une des revendications 1 à 5, **caractérisé en ce que** l'élément de construction inférieur (10) est composé de plastique.

8. Joint de soudage par friction selon l'une des revendications 1 à 7, **caractérisé en ce que** le corps de connexion (1, 17) est composé de métal.

9. Joint de soudage par friction selon l'une des revendications 1 à 7, **caractérisé en ce que** le corps de connexion (1, 17) est composé de plastique.

10. Joint de soudage par friction selon l'une des revendications 1 à 9, **caractérisé en ce que** la cuvette (4) est formée par un rebord coupant du tuyau (2) à partir duquel le côté frontal (3) de la pièce de tuyau (2) passe outre à l'espace creux (6) avec une forme d'entonnoir.

11. Joint de soudage par friction selon l'une des revendications 1 à 10, **caractérisé en ce que** le rebord extérieur forme un cercle fermé.

12. Joint de soudage par friction selon l'une des revendications 1 à 10, **caractérisé en ce que** le rebord extérieur est pourvu d'une denture (22).

13. Joint de soudage par friction selon l'une des revendications 1 à 12, **caractérisé en ce que** l'épaulement (7) exerce une pression sur l'élément de construction supérieur (9) à l'aide d'un ressort.

14. Joint de soudage par friction selon l'une des revendications 1 à 13, **caractérisé en ce que** l'épaulement (7) est appuyé contre l'élément de construction supérieur (9) après la formation de la zone de soudage par friction (12) lors de l'arrêt.

15. Joint de soudage par friction selon l'une des revendications 1 à 14, **caractérisé en ce que** l'épaulement (7) est doté d'un boudin annelé (24) sur sa surface orientée vers l'élément de construction supérieur.
